# EUROPEAN PATENT SPECIFICATION

(11) **EP 3 560 325 B1**
(45) Date of publication and mention of the grant of the patent: **18.08.2021**
(21) Application number: 17835450.2
(22) Date of filing: 18.12.2017
(51) Int. Cl.: A01G 13/02, E04F 10/02

(54) **APPARATUS AND SYSTEM FOR MOVING SUSPENDED OBJECTS**
VORRICHTUNG UND SYSTEM ZUM BEWEGEN VON HÄNGENDEN OBJEKTEN
APPAREIL ET SYSTÈME POUR DÉPLACER DES OBJETS SUSPENDUS

(30) Priority: 20.12.2016 CL 20163269
(43) Date of publication of application: 30.10.2019
(73) Proprietor: Prieto Dominguez, Jorge Eduardo, Vitacura, Santiago 7640794 (CL)
(72) Inventor: Prieto Dominguez, Jorge Eduardo, Vitacura, Santiago 7640794 (CL)
(74) Representative: Herrero & Asociados, S.L.
(86) International application number: PCT/CL2017/050077
(87) International publication number: WO 2018/112674

(56) References cited:
- NL-A- 9 200 389
- US-A- 5 451 445
- US-A1- 2007 051 054

## Description

### TECHNICAL FIELD OF THE INVENTION

The present invention is related to the field of buildings or structures for particular purposes, specifically to the field of tents or canopies, in general and in particular provides an apparatus and a system for moving suspended objects.

### BACKGROUND OF THE INVENTION

In the agriculture and agroindustry areas, the plastic covers have become lately important because they allow to neutralize uncontrollable climatic variables. Said covers, in general, are plastic barriers placed over the crops and suspended from cables or wires by means of rings or tubes for providing a barrier against adverse climatic conditions, such as hailing, raining or even frosting during the rippening or flowering of fruits.

However, when a permanent covering of the orchards is provided, there is a risk of exposing the fruits to temperatures above the ideal, plus the inhibition of the polinization because said covers filter the UV light that works as visible light for the bees performing said process. Consequently, in the agroindustry area, the periods in which the orchard is to be opened, that is when the plastic covers are retracted, and in which the orchard is to be closed, that is when the plastic covers are extended, have been defined.

In practice, said opening and closing of the orchards involve a high investment, due to the great extent of the covered orchards and to the lack of technical solutions alowing to automatize said operations.

One of the few solutions described in the prior art for automatically performing said orchard opening or closing, or in an equivalent way for opening and closing greenhouses roofs, is proposed in the document US 2007/051054 which describes a greenhouse having a portioned roof. Said roof has panels kept in position by means of rings suspended from cables. For providing the opening or closing of the greenhouse, each panel shows a rigid piece fixed to said cable in such a way that when the cable moves, said rigid piece also moves, consequently extending or retracting the corresponding panel.

On the other hand, the document US 4,296,568 describes a structure that is installed in a greenhouse for obtaining a retractable roof. The retractable roof comprises a movable cover that is supported by means of cables. In order to provide a movement of said movable cover, the structure has a traction element connected to said movable cover, wherein said traction element is also connected to a plurality of cables in such a way that a movement of said plurality of cables produces a movement of the traction element and, consequently, of the movable cover.

The document US 5,265,373, on its part, describes a hanging cover composed by a plurality of panels that are held to cables by means of rings. In order to provide the expansion or retraction of said plurality of panels, a system composed by cables connected to pulleys is provided, in such a way that a rotation of one of said pulleys produces a linear movement of the cable. The connection between said plurality of panels and said cable is obtained by means of a clamp. The user of said system may engage or disengage said clamp from its corresponding panel, which allows to selectively extend or retract said plurality of panels.

The document NL 9200389 describes a device for protecting a piece of crop land against the weather and sun, comprising a framework structure which is supported by uprights and comprises at least longitudinal and transverse beams, having a number of wires supported by said beams and tensioned parallel to one another. The device further comprises a cloth which can be displaced along the wires by means of guide elements, the cloth being provided with a number of openings arranged in parallel rows extending perpendicular, or virtually perpendicular, to the tensioning wires. Said guide elements have corresponding bodies larger than the opening formed in the cloth, said bodies being provided with a limb which fits through the opening and is designed with a coupling member for the tensioning wire.

Nevertheless, failures have been identified in the solutions described in the prior art. On one hand, the simultaneous movement of all the panels forming the sliding roof requires a driving element capable of provide a great power. For example, it is estimated that in a row having a length of 350 meters, approximately 30 retractable panels are provided, which are to be simultaneously moved, generating a great load for the driving system.

On the other hand, the systems of the prior art, by providing a fixing of the panel to its corresponding traction element, do not allow the release of the panel in case that said panel traps an obstacle, such as a branch of the trees or crops that are under said panel. Consequently, in case that such a trapping is produced, the plastic panel, the tree, or both, could be damaged due to the traction applied by the opening or closing systems.

Consequently, an apparatus and system for moving objects that are suspended by means of rings or tubes is required, such that when in operation, in addition to be agile and simple of operating, requires a low power driving element, and, at the same time, allows the releasing of the moved object in case that a problem interfering with the movement is produced.

### SUMMARY OF THE INVENTION

The present invention provides an apparatus for moving objects that are suspended by means of tubes or rings, according to claim 1.

In a preferred embodiment, the apparatus for moving objects that are suspended by means of tubes or rings comprises a first stop element and a second stop element, both of them projecting from said elongated body or portion, both being resilienty connected to said elongated body or portion, and positioned in opposed positions between each other in relation to said elongated body or portion.

In another preferred embodiment, said resilient connection is provided by linear springs. In a further preferred embodiment, the apparatus for moving objects that are suspended by means of tubes or rings additionally comprises adjusting elements for adjusting the elongation of said linear springs.

In another preferred embodiment, said resilient connection is provided by means of a torsion spring. In a further preferred embodiment, said torsion spring is fastened to a cylinder that is fixed to said elongated body or portion.

In an additional preferred embodiment, said stop element comprises two links pivotantly connected between them, each link, additionally, pivotantly connected to one plunger and wherein said plungers are positioned inside said elongated body opposed to each other.

The present invention also provides a system for moving objects that are suspended by means of tubes or rings comprising an apparatus according to claim 1, wherein the system additionally comprises a filiform element fixed by its two ends to the fixing means of said apparatus; a first and a second fixed pulleys operatively connected to said filiform element in such a way that said apparatus is positioned between said first and second fixed pulleys; and driving means of said filiform element.

In a preferred embodiment, the system for moving suspended elements by means of tubes or rings additionally comprises a plurality of guides for said filiform element. In a further preferred embodiment, said plurality of guides and said first and second pulleys are supported by a plurality of posts.

In another preferred embodiment, said driving means are an electric geared motor operatively coupled to a winch in which a portion of said filiform element is rolled.

### BRIEF DESCRIPTION OF THE DRAWINGS

Figure 1 shows a front view of a first embodiment of the apparatus that is object of the present invention.
Figure 2 shows a top view of a first embodiment of the apparatus that is object of the present invention.
Figure 3 shows a cut view in the B-B plane of a first embodiment of the apparatus that is object of the present invention.
Figure 4 shows a front view of a second embodiment of the apparatus that is object of the present invention.
Figure 5 shows a top view of a second embodiment of the apparatus that is object of the present invention.
Figure 6 shows a cut view in the D-D plane of a second embodiment of the apparatus that is object of the present invention.
Figure 7 shows a cut view in the B-B plane of a first embodiment of the apparatus that is object of the present invention interacting with a ring.
Figure 8 shows a first embodiment of the system that is object of the present invention, with the apparatus in a far position from the ring, before capturing the same.
Figure 9 shows an embodiment of the system that is object of the present invention, with the apparatus in an initial position of the ring.
Figure 10 shows an embodiment of the system that is object of the present invention, with the apparatus in an intermediate position of the ring.
Figure 11 shows an embodiment of the system that is object of the present invention, with the apparatus in a final position of the ring.
Figure 12 shows an embodiment of the system that is object of the present invention, with the apparatus in a far position from the ring, after releasing the same.

### DETAILED DESCRIPTION OF THE INVENTION

Although the invention was developed looking for a solution related to the agroindustry, the invention may be applied to any kind of industry in which the moving of objects that are suspended by means of rings or tubes is required, such as the case of curtains, movable walls or closings, roofs of tents or canopies, among others.

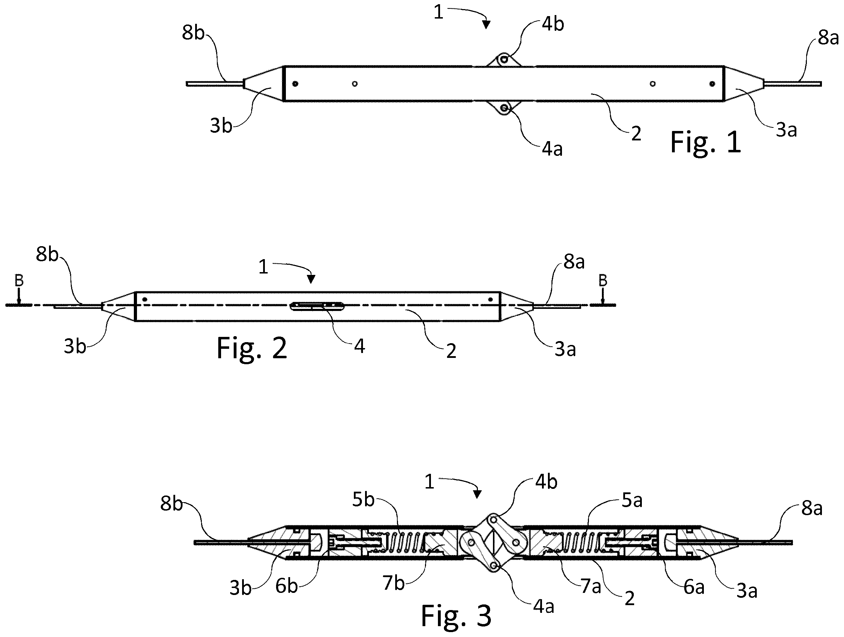

Regarding figures 1 to 6, the same show front, top and cut views of two embodiments of the apparatus (1) for moving objects that are suspended by means of tubes or rings (11).

Essentially, the present invention provides an apparatus (1) for moving objects that are suspended by means of tubes or rings (11) comprising three essential features: an elongated body or portion (2) having two ends; fixing means (3a, 3b) for a filiform element (8) positioned at each of said ends of said elongated body or portion (2); and a stop element (4) projecting from said elongated body or portion (2) and resiliently connected to said elongated body or portion (2).

It is to be understood that a filiform element (8) is an element having properties similar to a thread and that may be, without limiting to it, a cable, a rope, a thread, a strip, a belt or any other element having similar characteristics to the previously listed.

Additionally, it is to be understood that a resilient connection is refered to a connection that allows a deformable object being subject to a deforming force to recover its shape after the deforming force is no longer applied.

In general terms, the functioning of the apparatus (1) that is object of the present invention is understood as a catch-release functioning. In this case, the stop element (4a) pushes the ring or tube (11) by means of which the object of interest is suspended until the force that the ring or tube (11) applies on that stop element (4a) is such that it produces a resilient deformation of said stop element (4a), therefore producing the apparatus to pass through said ring or tube (11), consequently releasing said ring or tube (11). The above allows to sequentially move a plurality of objects that are suspended by means of tubes or rings (11).

Regarding the elements being part of the apparatus (1) for moving objects that are suspended by means of tubes or rings (11) that is object of the present invention, the same will be following described in further detail.

The elongated body or portion (2) fulfills the function of being a support for other elements being part of the apparatus (1) that is object of the present invention.

Said elongated body or portion (2) does not require to be made by a single piece, but may be formed by a plurality of pieces that, together, form said elongated body or portion (2). In a preferred embodiment, said elongated body or portion (2) may be a block to which the other elements being part of the apparatus (1) that is object of the present invention are fixed.

The material with which said elongated body is made does not limit the scope of the present invention. In a preferred embodiment, said elongated body is made of aluminium, however, it is possible to use other materials depending on the specific application, such as steel, plastic, teflon, among others.

On the other hand, although in a preferred embodiment said elongated body has a hollow cylindrical shape, the shape of said elongated body does not limit the scope of the protection. The cylindrical shape previously indicated allows its fabrication by means of machine tools, such as a lathe.

Said fixing means (3a, 3b) allows the positioning of the apparatus (1) between two ends of a filiform element (8) or between two different filiform elements (8), in such a way that a movement of the filiform element (8) produces a movement of the apparatus (1) for moving objects that are suspended by means of tubes or rings (11) that is object of the present invention.

Any way to provide said fixing means (3a, 3b) is adequate for carrying out the present invention. In a preferred embodiment, said fixing means (3a, 3b) have an essentially conical shape, with a cylindrical protrusion at their base and a perforation along their axis. In this way, the filiform element (8) may enter said perforation and be fixed by means of a stop, or knot acting as a stop, that avoids the filiform element (8) to disengage from said fixing means (3a, 3b). In this preferred embodiment, without limiting the scope of the present invention, the cylindrical protrusion includes a thread on its surface and the elongated body includes complementary threads at its ends, in such a way that said fixing means (3a, 3b) may be screwed and fixed to said ends of the elongated body.

However, other fixing means (3a, 3b) for the filiform element (8) may be used without limiting the scope of the protection. For example, clamps, eyelets, rings, threads or other elements allowing to fix said filiform element (8) to different positions of the elongated body or portion (2) may be used.

The apparatus for moving objects that are suspended by means of tubes or rings (11) that is object of the present invention also includes a stop element (4) projecting from said elongated body or portion (2) and that is resiliently connected to said elongated body (2). Said stop element (4) fulfills the function of catching and pushing the tube or ring (11) by means of which the element to be moved is suspended. In this way, when the apparatus (1) is moved by the movement of the filiform element (8), the object of interest is also moved. The resilient connection between the stop element (4) and the elongated body or portion (2) may be provided by means of any adequate means. For example, and without limiting the scope of the protection, said connection may be provided by means of one or more springs (5) which may be linear or torsion springs. Other means by means of which said resilient connection may be provided, without limiting to those, may be rubber bands, pneumatic cylinders, piezoelectric elements, among others. It is also to be understood, without limiting the scope of the protection, that said resilient connection may be provided by a plurality of elements that, as a consequence of their interaction, obtain a characteristic that provides resiliency to the group.

Additionally, without limiting the scope of the protection, adjusting elements (6) for adjusting the feature that provides the resiliency may be provided. For example, without limiting the scope of the protection, when the resilient connection is performed using linear springs (5a, 5b), adjusting elements (6a, 6b) for adjusting the elongation of said linear springs may be provided.

In a preferred embodiment, without limiting the scope of the protection, the apparatus that is object of the present invention comprises a second stop element (4b) projecting from said elongated body or portion (2) and positioned at an opposite position to the first stop element (4a). For example, in figures 1 to 7 it is observed an apparatus (1) including two stop elements (4a, 4b). However, a person ordinarilly skilled in the relevant art will note that it is possible to solve the same technical problem using only one stop element (4) or more than two stop elements. Said first and second stop elements (4a, 4b) may or not be connected between them without limiting the scope of the present invention. In a preferred embodiment, said first and second stop elements (4a, 4b) are pivotantly connected to each other, in such a way that both stop elements (4a, 4b) are deformated essentially at the same time.

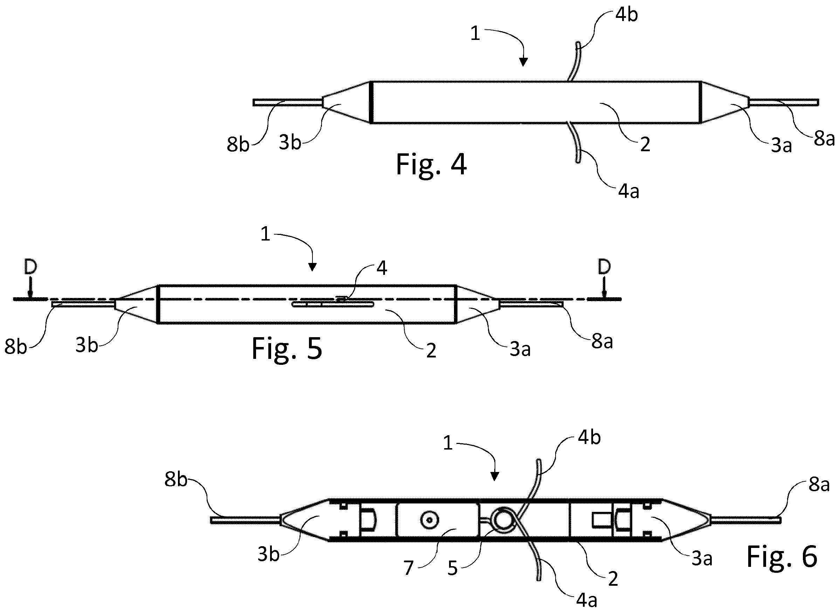

The stop element (4) may be formed by a single piece, like in figures 4 to 6, or be formed by a plurality of interconnected pieces, like in figures 1 to 3 and figure 7, without limiting the scope of the protection.

In a preferred embodiment, said stop element (4) comprises two links pivotantly connected to each other. In this particular embodiment, each link, additionally, is pivotantly connected to one plunger (7a, 7b) that is inside said elongated body. Said plungers (7a, 7b) are positioned inside said elongated body at opposite positions between them. In this embodiment, said plungers (7a, 7b) provide the resilient connection between the stop element (4) and the elongated body (2). The previous may be obtained, for example and without limiting the scope of the protection, by means of corresponding linear springs (5a, 5b) which are connected to said plungers in an opposite position to the pivotant connection between the plunger (7) and the corresponding link.

This preferred embodiment has the particularity that the angle of said links with respect to the elongated body may be fixed in such a way that the neccesary force for releasing the tube or ring is different for each direction of movement of the apparatus (1). The previous is particularly advantageous in certain agroindustry application in which the force required for deploying a cover is different from that required for retracting the same cover. To fix the angle of said links, adjusting elements (6a, 6b) may be provided at a position of the linear springs (5a, 5b) that is opposite to the plungers (7a, 7b). Said adjusting elements may be, without limiting the scope of the protection, bolts oversized in length with respect to a through thread positioned inside the elongated bosy, and may be, without limiting the scope of the protection, allen bolts. In the end of the thread of said bolt that is far from the head of the same, a piece that provides a coupling between the linear spring (5a or 5b) and the corresponding adjusting element (6a or 6b) is provided in such a way that a rotation of said bolt produces an elongation or compression of the corresponding linear spring (5a or 5b) which, therefore, produces a change in the angle of the corresponding links.

In an equivalent way, in the embodiment in which a torsion spring (5) is used, it is possible to provide an adjusting element of the torsion of said spring or of the angle that the stop element (4) forms with the elongated body or portion (2). Said adjusting element may be provided, for example and without limiting the scope of the protection, by means of an axis that couples to said torsion spring (5) in such a way that a rotation of the axis produces a rotation of the torsion spring and, consequently, an adjust of the angle that the stop element (4) forms with the elongated body or portion (2).

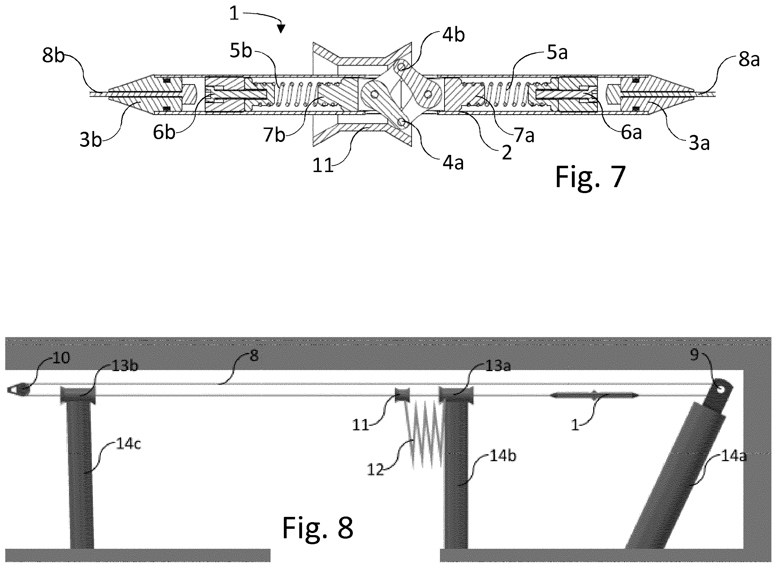

The present invention also provides a system for moving objects that are suspended by means of tubes of rings (11) comprising an apparatus (1) according to any of the previously described embodiments and that, broadly, comprises a elongated body or portion (2), fixing means (3a, 3b) for a filiform element (8) at different positions of said elongated body or portion (2), and a stop element (4) projecting from said elongated body or portion (2) and resiliently connected to said elongated body or portion (2); a filiform element (8) fixed in its both ends to the fixing means (3a, 3b) of said apparatus (1); a first fixed pulley (9) and a second fixed pulley (10) operatively connected to said filiform element (8) in such a way that said apparatus (1) is positioned between said first and second fixed pulleys (9 and 10); and driving means for said filiform element (8). Said system is illustrated in figures 8 to 12.

Regarding the filiform element (8) forming part of the system that is object of the present invention, it is to be understood in a broad way that said filiform element (8) is an element having properties similar to a thread and that may be, without limiting to those, a cable, a rope, a thread, a strip or another element having similar characteristics to those previously listed. Additionally, it is to be understood that the way in which the ends of said filiform element (8) to the apparatus (1) does not limit the scope of the present invention and it will depend on the way in which the fixing means (3a, 3b) of said apparatus and the filiform element (8) are carried out. In a preferred embodiment, without limiting the scope of the present invention, said filiform element (8) is a steel cable.

In the same sense, the way in which the connection between the first fixed pulley (9) and the filiform element (8), as well as between said filiform element (8) and the second fixed pulley (10), is provided will depend on the nature of said filiform element (8). For example, without limiting the scope of the protection, when said filiform element (8) is a steel cable, it is to be understood that said operative connection is provided if a portion of said steel cable is contacting a part of the troughed portion of said pulley (9 or 10) in such a way that a movement of said steel cable produces a rotation of the wheel of said pulley.

Regarding the driving means of said filiform element (8), the same may be automatic or manual without limiting the scope of the protection and its function is to provide the movement of said filiform element (8). In a preferred embodiment, without limiting the scope of the protection, said driving means may be provided as an electric geared motor (not shown) operatively coupled to a winch (not shown) in which a portion of the filiform element (8) is rolled. In this way, by operating said electric geared motor, it is produced a rotation of said winch, which produces a movement of the filiform element and, therefore, a movement of the apparatus (1) that is part of the system that is object of the present invention. The use of an electric geared motor operatively coupled to a winch, also, is advantageous when the forces that are applied on the apparatus (1) which is part of the system that is object of the present invention produce a high tension on the filiform element (8) that is part of said system, because said group is capable of apply a torque sufficient enough for compensating said tension. However, a person ordinarily skilled in the art will note that it is possible to provide other driving means for said filiform element (8) such as, without limiting to those, a crank, or other rotating means, operatively coupled to one of the fixed pulleys (9 or 10), a ratchet coupled to said filiform element (8) or other adequate driving means.

In a preferred embodiment, without limiting the scope of the protection the system for moving objects that are suspended by means of tubes or rings (11) that is object of the present invention, aditionally comprises a plurality of guides (13a, 13b) for said filiform element (8), that allows to define a track along which said filiform element (8) is deployed. The nature of said guides (13a, 13b) does not limit the scope of the protection and may be tubes, rings, channels, pulleys or other elements that allow to guide said filiform element (8). Additionally, said guides (13) that are between the first and second fixed pulleys (9 and 10), must allow the apparatus (1) which is part of the system that is object of the present invention to pass through. The materials with which said plurality of guides (13a, 13b) are made do not limit the scope of the protection that is applied for.

In another preferred embodiment, without limiting the scope of the protection, said plurality of guides (13a, 13b) and said first and second fixed pulleys (9 and 10) may be supported on a plurality of posts (14a, 14b, 14c) that are positioned along the track defined by said plurality of guides (13a, 13b) and said first and second fixed pulleys (9 and 10). The geometry or materials with which said plurality of posts (14a, 14b, 14c) are made do not limit the scope of the protection that is applied for. In a preferred embodiment, without limiting the scope of the protection, said plurality of posts (14a, 14b, 14c) are buried wood posts having a height of at least 5 meters, measured from the surface in which they are buried.

According to the previously detailed description it is possible to obtain an apparatus (1) and a system for moving objects that are suspended by means of tubes or rings (11) whose operation requires a low power driving element by working in a sequential way instead of a simultaneous way, and at the same time allowing to release the moved element in case there is a problem interfering or obstructing the movement.

Below, there are presented examples of application of the present invention. It is to be understood that the goal of said examples is to provide with a better understanding of the present invention but they do not limit the scope of the applied protection.

### EXAMPLES OF EMBODIMENTS

### Example 1: Application of the system for moving suspended objects in the deployment and retractment of orchard covers.

Figures 8 to 12 show, as a whole, a sequence of deployment of an orchard cover (12) that is suspended by means of tubes (11). In Figure 8 it is observed that the apparatus (1) that is part of the system of the present invention is in a far position from said tube (11).

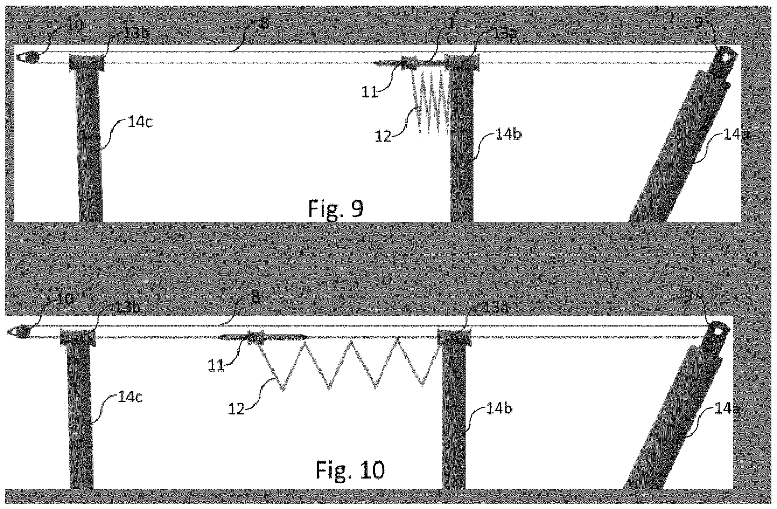

When the filiform element (8) is moved, the apparatus (1) is also moved up to the position of said tube (11), said situation is illustrated in Figure 9. In this position, due to the diameter of said tube (11) is lower than the width of said apparatus (1), the stop element (4) of said apparatus (1) couples to said tube, as is shown in Figure 7. Therefore, a further movement of the filiform element (8) produces that apparatus (1) to drive said tube (11).

As is shown in Figure 10, as the tube is moved (11) by means of the pushing of the apparatus (1) that is part of the system, the orchard cover (12) is being deployed until the complete deployment of said cover (12) is achieved.

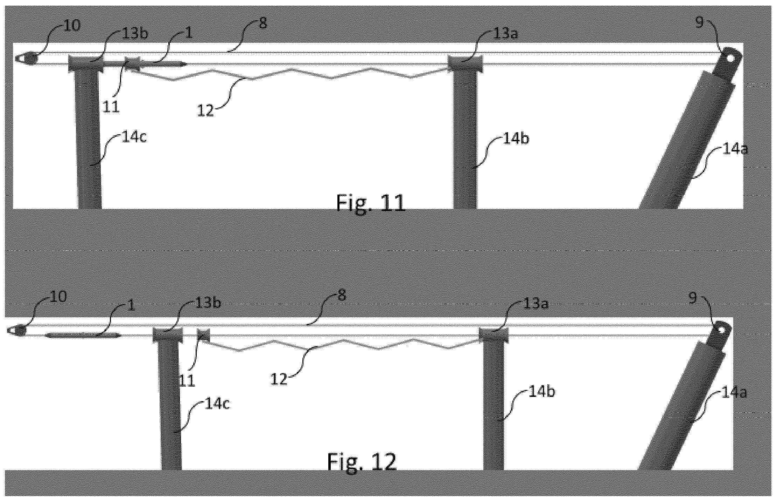

Figure 11 shows the situation in which the cover (12) is completely deployed. In this situation, the force that the tube (11) applies on the stop element (4) of the apparatus (1) begins to increase until it is large enough for shrinking the apparatus (1) due to the compression of the stop element (4). Therefore, in this situation, the apparatus (1) may go through said tube (11), releasing said tube (11) and lowering the tension applied on that cover (12).

Finally, Figure 12 shows that, after releasing the tube (11) holding the orchard cover (12), the apparatus (1) that is part of the system is capable of moving along the track of the filiform element (8). In this situation, also, because the connection between the stop element (4) and the elongated body (2) is resilient, said stop element (4) returns to its initial position. Additionally, in case there is a second cover along said track, the previously detailed sequence will be repeated, deploying said second cover.

Although this situation is not shown in the figures, in case there is a need to retract the orchard cover (12), the apparatus (1) that is part of the system must be moved in the opposite direction to that detailed, producing, in this case, a movement of the tube (11) in the opposite direction and, therefore, retracting the orchard cover (12).

## Claims

1. An apparatus (1) for moving an object that is suspended by means of tubes or rings (11), comprising:
- an elongated body (2) having an elongated portion having two ends;
- fixing means (3a, 3b) for a filiform element (8) positioned at each of said ends of said elongated body (2); and
- a stop element (4) projecting from said elongated portion of said elongated body (2) and resiliently connected to said elongated body (2), such that the stop element (4) pushes the ring or tube (11) by means of which the object is suspended until the force that the ring or tube (11) applies on that stop element (4) is such that it produces a resilient deformation of said stop element (4), therefore producing the apparatus to pass through said ring or tube (11), consequently releasing said ring or tube (11).

2. The apparatus (1) according to claim 1, including a first stop element (4a) and a second stop element (4b), both being positioned opposed to each other and projecting from said elongated body (2) and resiliently connected to the same.

3. The apparatus (1) according to claim 1, wherein the stop element (4) comprises two links pivotantly connected to each other, each link also pivotantly connected to a plunger (7a, 7b) and wherein said plungers (7a, 7b) are positioned inside said elongated body (2) at opposite positions between them.

4. The apparatus (1) according to any of the claims 1 or 2, wherein said resilient connection is obtained by means of linear springs (5a, 5b).

5. The apparatus (1) according to claim 4, additionally comprising adjusting elements (6a, 6b) of the elongation of said linear springs (5a, 5b).

6. The apparatus according to any of the claims 1 or 2, wherein said resilient connection is obtained by means of a torsion spring (5).

7. The apparatus (1) according to claim 6, wherein said torsion spring (5) is coupled to a cylinder that is fixed to the elongated body (2)

8. A system for moving an object that is suspended by means of tubes or rings (11), comprising an apparatus according to claim 1; wherein the system additionally comprises:
- a filiform element (8) fixed at its both ends to the fixing means (3a, 3b) of said apparatus (1);
- a first fixed pulley (9) and a second fixed pulley (10) operatively connected to said filiform element (8) in such a way that said apparatus is positioned between said first and second fixed pulleys (9 and 10); and
- driving means for said filiform element (8).

9. The system according to claim 8, additionally comprises a plurality of guides (13a, 13b) for said filiform element (8).

10. The system according to claim 9, wherein said plurality of guides (13a, 13b) and said first and second fixed pulleys (9 and 10) are supported on a plurality of posts (14a, 14b, 14c).

11. The system according to claim 8, wherein said driving means are an electric geared motor operatively coupled to a winch in which a portion of said filiform element (8) is rolled.

## Patentansprüche

1. Vorrichtung (1) zum Bewegen eines Objekts, das durch Rohre oder Ringe (11) aufgehängt ist, umfassend:
einen gestreckten Körper (2), der einen gestreckten Teilbereich mit zwei Enden aufweist;
Befestigungsmittel (3a, 3b) für ein fadenförmiges Element (8), das an jedem der Enden des gestreckten Körpers (2) angeordnet ist; und - ein Anschlagelement (4), das von dem gestreckten Teilbereich des gestreckten Körpers (2) hervorsteht und mit dem gestreckten Körper (2) elastisch verbunden ist, sodass das Anschlagelement (4) den Ring oder das Rohr (11), durch die das Objekt aufgehängt ist, drückt, bis die Kraft, die der Ring oder das Rohr (11) auf dieses Anschlagelement (4) aufbringen, so ist, dass sie eine elastische Verformung des Anschlagelements (4) erzeugt, demzufolge bewirkt, dass die Vorrichtung durch den Ring oder das Rohr (11) hindurchgeht, infolgedessen den Ring oder das Rohr (11) freigibt.

2. Vorrichtung (1) nach Anspruch 1, die ein erstes Anschlagelement (4a) und ein zweites Anschlagelement (4b) umfasst, die beide einander gegenüberliegend positioniert sind und von dem gestreckten Körper (2) hervorstehen und mit demselben elastisch verbunden sind.

3. Vorrichtung (1) nach Anspruch 1, wobei das Anschlagelement (4) aus zwei Verbindungsstücken besteht, die, als Drehgelenk dienend, miteinander verbunden sind, wobei jedes Verbindungsstück außerdem, als Drehpunkt dienend, mit einem Kolben (7a, 7b) verbunden ist, und wobei die Kolben (7a, 7b) im Innern des gestreckten Körpers (2) an entgegengesetzten Positionen zwischen ihnen angeordnet sind.

4. Vorrichtung (1) nach einem der Ansprüche 1 oder 2, wobei die elastische Verbindung durch lineare Federn (5a, 5b) erlangt wird.

5. Vorrichtung (1) nach Anspruch 4, die zusätzlich aus Stellelementen (6a, 6b) der Dehnungsfähigkeit der linearen Federn (5a, 5b) besteht.

6. Vorrichtung nach einem der Ansprüche 1 oder 2, wobei die elastische Verbindung durch eine Torsionsfeder (5) erlangt wird.

7. Vorrichtung (1) nach Anspruch 6, wobei die Torsionsfeder (5) an einem Zylinder angehängt ist, der mit dem gestreckten Körper (2) befestigt ist.

8. System zur Bewegung eines Objektes, das durch Rohre oder Ringe (11) aufgehängt ist, das aus einer Vorrichtung nach Anspruch 1 besteht;
wobei das System zusätzlich umfasst:
- ein fadenförmiges Element (8), das an seinen beiden Enden an den Befestigungsmitteln (3a, 3b) der Vorrichtung (1) festgemacht ist; - eine erste feste Seilscheibe (9) und eine zweite feste Seilscheibe (10), die mit dem fadenförmigen Element (8) funktionsfähig verbunden sind, derart, dass die Vorrichtung zwischen der ersten und der zweiten festen Seilscheibe (9 und 10) angeordnet ist; und-Antriebsmittel für das fadenförmige Element (8).

9. System nach Anspruch 8, das zusätzlich aus einer Vielzahl von Führungen (13a, 13b) für das fadenförmige Element (8) besteht.

10. System nach Anspruch 9, wobei die Vielzahl von Führungen (13a, 13b) und die erste und die zweite feste Seilscheibe (9 und 10) auf einer Vielzahl von Stäben (14a, 14b, 14c) gelagert sind.

11. System nach Anspruch 8, wobei das Antriebsmittel ein elektrischer Getriebemotor ist, der mit einer Winde funktionsfähig verbunden ist, in welcher ein Teil des fadenförmigen Elements (8) aufgewickelt wird.

## Revendications

1. Appareil (1) pour déplacer un objet qui est suspendu au moyen de tubes ou d'anneaux (11), comprenant :
- un corps allongé (2) ayant une partie allongée ayant deux extrémités ;
- des moyens de fixation (3a, 3b) pour un élément filiforme (8) positionnés à chacune desdites extrémités dudit corps allongé (2) ; et
- un élément d'arrêt (4) faisant saillie à partir de ladite partie allongée dudit corps allongé (2) et connecté de manière élastique audit corps allongé (2), de telle sorte que l'élément d'arrêt (4) pousse l'anneau ou le tube (11) au moyen duquel l'objet est suspendu jusqu'à ce que la force que l'anneau ou le tube (11) applique sur cet élément d'arrêt (4) soit telle qu'elle produit une déformation élastique dudit élément d'arrêt (4), en produisant ainsi l'appareil pour passer à travers ledit anneau ou ledit tube (11), en libérant par conséquent ledit anneau ou ledit tube (11).

2. Appareil (1) selon la revendication 1, comprenant un premier élément d'arrêt (4a) et un second élément d'arrêt (4b), tous deux étant positionnés à l'opposé l'un de l'autre et faisant saillie depuis ledit corps allongé (2) et reliés de manière élastique à celui-ci.

3. Appareil (1) selon la revendication 1, dans lequel l'élément d'arrêt (4) comprend deux liaisons reliées de manière pivotante l'une à l'autre, chaque liaison étant également reliée de manière pivotante à un plongeur (7a, 7b) et dans lequel lesdits plongeurs (7a, 7b) sont positionnés à l'intérieur dudit corps allongé (2) dans des positions opposées entre eux.

4. Appareil (1) selon l'une quelconque des revendications 1 ou 2, dans lequel ladite connexion élastique est obtenue au moyen de ressorts linéaires (5a, 5b).

5. Appareil (1) selon la revendication 4, comprenant en outre des éléments d'ajustement (6a, 6b) de l'allongement desdits ressorts linéaires (5a, 5b).

6. Appareil selon l'une quelconque des revendications 1 ou 2, dans lequel ladite connexion élastique est obtenue au moyen d'un ressort de torsion (5).

7. Appareil (1) selon la revendication 6, dans lequel ledit ressort de torsion (5) est couplé à un cylindre qui est fixé au corps allongé (2).

8. Système pour déplacer un objet qui est suspendu au moyen de tubes ou d'anneaux (11), comprenant un appareil selon la revendication 1 ;
dans lequel le système comprend en outre :
- un élément filiforme (8) fixé à ses deux extrémités aux moyens de fixation (3a, 3b) dudit appareil (1) ;
- une première poulie fixe (9) et une seconde poulie fixe (10) connectées de manière fonctionnelle audit élément filiforme (8) de telle sorte que ledit appareil est positionné entre lesdites première et seconde poulies fixes (9 et 10) ; et
- des moyens d'entraînement pour ledit élément filiforme (8).

9. Système selon la revendication 8, comprenant en outre une pluralité de guides (13a, 13b) pour ledit élément filiforme (8).

10. Système selon la revendication 9, dans lequel ladite pluralité de guides (13a, 13b) et lesdites première et seconde poulies fixes (9 et 10) sont supportés sur une pluralité de montants (14a, 14b, 14c).

11. Système selon la revendication 8, dans lequel lesdits moyens de traction sont un motoréducteur électrique couplé fonctionnellement à un treuil dans lequel une partie dudit élément filiforme (8) est enroulée.
